# EUROPEAN PATENT APPLICATION

(11) **EP 1 908 584 A1**
(43) Date of publication of application: **09.04.2008**
(21) Application number: 06020688.5
(22) Date of filing: 02.10.2006
(51) Int. Cl.: B32B 17/10, H05B 3/84, B32B 15/09, B32B 27/36, H05K 3/18

(54) **Laminated glazing**

(71) Applicant: Scheuten S.à.r.l., 5916 PA Venlo (NL)
(72) Inventor: Dirks, Frank, 6127 CJ Grevenbicht (NL); Ten Haaft, Mathijs, 6441 LB Brunssum (NL); Rothfusz, Paul, 5591 Heeze (NL)
(74) Representative: Jostarndt, Hans-Dieter

(57) **Abstract**

A laminated glazing comprising two panes of glazing material, a sheet of interlayer material extending therebetween, and an electrically conductive member formed (possibly etched) from a sheet of electrically conductive material also positioned between the panes. The electrically conductive member may be a heating element which comprises a plurality of spaced apart, fine heating lines, electrically connected to a pair of busbars. The heating element may be divided into at least two heating zones, each having a different power density, and/or it may include a non-heated area.

Also a method of manufacturing such a glazing involving locating a pre-formed electrically conductive member and a sheet of interlayer material on a first pane of glazing material, placing a second pane of glazing material in register with the first so that the electrically conductive member and the interlayer material are between the two panes, and laminating in an autoclave.

## Description

The present invention relates to a laminated glazing, and in particular to a vehicular laminated glazing, which may be used to glaze any opening in a vehicle (for example it may be used as a windshield, a backlight, a sidelight or a rooflight in an automotive vehicle).

A laminated glazing typically comprises two panes of glazing material with a sheet of interlayer material in between. However, further plies of glazing material and interlayer material may be incorporated into a laminate construction as required. Many known laminated glazings have an added functionality, the most common being that a glazing is heatable, so that in cold weather conditions, it may easily be de-iced or demisted to improve visibility through it. Presently there are a number of ways in which a laminated glazing may be heated, including use of fine wires (of tungsten or copper) or a fired silver ink print to form a heating element, or use of a heatable conductive coating. A pair of busbars of electrically conductive material (typically tinned copper strips or fired, silver ink print) is usually placed in electrical contact with whichever of these heating means is chosen to be part of the heating circuit in the glazing. Electrical power is then normally supplied via the busbars to the heating means to resistively heat the glazing.

Each of the aforementioned heating means however has associated disadvantages. Tungsten wires can only be laid with a very modest degree of curvature, so that more complex heating patterns for curved and irregularly shaped glazings cannot be achieved. A conductive coating will often have one or more "hotspots" (areas of localised, increased power density), which typically appear when the area of the coating is non-quadrate (for example if the area of the coating is trapezoidal) or if there are one or more non-heated areas in the coating (which allows radiation that would otherwise be blocked, or at least impeded, by the coating through a glazing). A fired, silver ink print is a visually obtrusive means of heating a laminated glazing, as are copper wires, neither of which is therefore a preferred choice.

The present invention seeks to provide an improved manner of realising the added functionality of a laminated glazing, which does not suffer from the problems set out above.

According to the present invention there is provided a laminated glazing comprising
two panes of glazing material,
a sheet of interlayer material extending there between, and
an electrically conductive member, also positioned between the panes of glazing material,
wherein the electrically conductive member is formed from a sheet of electrically conductive material.

The sheet of electrically conductive material from which the electrically conductive member is formed is a discrete entity, which exists independently of the other components of the glazing, i.e. it is in the nature of a leaf or foil, as distinct from a layer of deposited material. It is thus quite different from a prior art conductive coating or fired silver ink print, each of which can only exist when formed on a substrate, i.e. a conductive coating and a fired silver ink print cannot exist independently of the pane of glazing material on which they are deposited. The sheet of electrically conductive material may ordinarily have a thickness less than 200 µm because at any greater thickness the sheet may be difficult to process for inclusion in the glazing, and preferably between 5 and 15 µm. For the avoidance of doubt, "thickness" refers to the depth of the material in a direction perpendicular to the glazing. Wires typically have a diameter in the range 25 to 150 µm, and so are much thicker and more visually obtrusive than an electrically conductive member made from a sheet of electrically conductive material.

The panes of glazing material may be panes of glass, one or both of which may be clear or tinted, and which may also be toughened, or panes of a plastics material, for example polycarbonate. The inorganic glass contains SiO₂ in the range of 30 to 95 % , especially in the range of 45 to 90 %, CaO in the range of 1 to 40 %, especially in the range of 2 to 25 % and Na₂O in the range of 1 to 40 %, especially in the range of 1 to 25 %. Preferably the glass contains also Al₂O₃ in the range of 0,1 to 40 %, especially in the range of 0,1 to 25 %. An increased content of alkalyn oxides like CaO or Na₂O may lower the melting temparuture. The addition of aluminium oxide enhances the chemical restance and the mechanical properties of the glass, as this oxide enhances the stability of the SiO₄-network formed within the glass. The panes of glazing material may be flat or they may be curved. Each pane of glazing material may be between 0.5 and 25 mm in thickness, preferably between 1 and 5 mm. The sheet of interlayer material may be any material known in the art that is suitable for joining two panes of glazing material together to form a laminate.

Preferably, the interlayer material is polyvinylbutyral ("PVB") and it typically provided in a thickness of between 0.38 and 1,1 mm, but most commonly 0.76 mm. The overall thickness of the laminated glazing may therefore be between 2 and 100 mm, and preferably between 3 and 6 mm.

Preferably, the electrically conductive member is etched from the sheet of electrically conductive material. More preferably, the member is photochemically-etched from the sheet of material. One method of photochemical etching that may be used to form the electrically conductive member involves creating a template of the member, placing the template over a sheet of electrically conductive material which has been surface treated with a photo-sensitive lacquer, subjecting this duplet to radiation so that the exposed portions of the lacquer are photochemically degraded, and using an acid to remove the degraded lacquer and the corresponding areas of the electrically conductive material below. However, any other etching procedure known in the art which could form the electrically conductive member would be suitable.

Desirably, the electrically conductive member may be a heating element. By "heating element" is meant a device which performs the function of de-icing and demisting a glazing as and when required. The heating element typically comprises a plurality of spaced apart, fine heating lines, The heating lines usually extend over the area of the glazing that is to be de-iced and de-misted, and this area may correspond to substantially the entire area of the glazing itself. Preferably, the heating lines are black in colour, to minimise their appearance in the glazing; the black colouration may be achieved by oxidation of the lines themselves.

To perform their heating function, the heating lines ordinarily require a supply of electrical energy so that they may resistively heat the glazing. Normally a pair of busbars is provided to supply an electric current to the heating lines. The busbars may exist independently of the heating lines and may be made from, for example, tinned copper strips or silver prints, as is known. However, the busbars may also be formed from a sheet of electrically conductive material, in the same manner as the heating element itself. For simplicity of assembly of the glazing, the heating element may comprise the pair of busbars, to which the heating lines are electrically connected, so that the heating lines and associated busbars are formed as one continuous piece from the sheet of electrically conductive material.

The heating lines used to heat the glazing may extend over the area to be heated in a linear manner (i.e. each heating line is rectilinear), which is useful if the area to be heated is of a regular shape such as square or rectangular, or in a non-linear manner (i.e. one or more heating lines have some degree of curvature), which is useful if the area to be heated is of an irregular shape such as trapezoidal. Furthermore, the heating lines may be arranged so that the heating element includes one or more non-heated areas. A non-heated area may be included in a glazing so that electromagnetic radiation, which may otherwise be blocked or impeded by the heating element, may be transmitted through the glazing.

The width of each of the heating lines is important when considering the aesthetics of a glazing, when designing the pattern of the heating element, and also when assuring that the glazing meets legal requirements regarding visibility through the glazing. For these reasons it is preferred that the width of each heating lines is less than 30 µm and preferably less than 20 µm. The width of each heating line may vary along its length, thereby varying the resistance of each line (for a constant thickness) along its length. This feature may be especially useful when designing a heating element for an irregularly shaped glazing, and also when designing a heating element that is non-uniform in its power density (as will be explained in more detail later).

The spacing between each of the heating lines is also important because if adjacent heating lines are too far apart the glazing may exhibit a shimmering effect due to a difference in the refractive index of the PVB interlayer between those areas locally heated because of the presence of a heating line and those areas which are locally unheated, and if adjacent heating lines are too close together it may not be possible to achieve the desired overall resistance required of the heating element to achieve effective heating. Preferably, the spacing between each of the heating lines is greater than 0.5 mm and preferably up to around 2.5 mm to 3 mm. The spacing between any two heating lines may vary along the length of those lines, but preferably should not go below the minimum spacing specified herein at any point.

Preferably, the heating element provides a power density which varies over the area of the glazing to be heated. The power density may vary in a smooth and continuous manner, or in may alter suddenly at pre-determined locations in the glazing. The heating element may preferably be divided into at least two heating zones, each having a different power density. This may be useful if there is one portion of a glazing, which needs to be de-iced or de-misted more quickly than the remainder of the glazing. When the glazing is intended for use in a vehicle, one of the heating zones may be a heated wiper rest area, which may be preferentially de-iced more quickly than the remainder of the glazing so that the wiper of the associated vehicle is readily freed up for use to clear the outside surface of the glazing.

Advantageously, the electrically conductive member may itself be provided on a sheet of polymeric material. Any sheet of polymeric material suitable for including in a laminate may be used, however polyethylene terephthalate ("PET") is preferred because at the lamination temperatures used, it is a relatively stable material, it is transparent and it is readily available. The conductive member may preferably at least partially be embeded into or glued to the sheet of polymeric material.

The conductive member may be at least partially embedded into the sheet of polymeric material for example by laminating them together optionally while heating.

The glue has preferably to be transparent. Polyolefin as well as polyurethane based glues may for example be used.

In preferred embodiments of the present invention polyolefin based glues are used as they may have a better long term stability.

Moreover, in an even more preferred embodiment of the present invention the glue may be based on the same material as the sheet of polymeric material. This further increases the compatibility between the glue and and sheet of polymeric material provides a stronger and longer lasting gluing.

The glue may therefore for example be selected from polyethylene-based glues.

Furthermore the glue may comprise one or more components with or without additives such as cross-linking agents, viscosity adjusting agents, tackifiers, colorants, antioxidants, UV or IR-absorbing compounds to stronger or quicker or longer lasting gluing. Furthermore, glues with more then one component may be easier to handle as they work as glues only when at least two components are in contact.

When incorporated into the laminated glazing, the sheet of polymeric material and the electrically conductive member may themselves be laminated between two plies of interlayer material, forming a composite interlayer (which is then laminated between the two panes of glazing material).

The laminated glazing may be curved, in which case, the composite interlayer may be pre-formed and pre-shaped to have the curvature of the final glazing. One way in which the composite interlayer may be pre-shaped is described in WO 2004/110747 A1, where a thermoplastic functional film is thermoformed and subsequently cooled by forced draught prior to its introduction between the panes, which are to form a laminate.

Preferably, the sheet of polymeric material has a thickness less than 1 mm, and further preferably between 0.05 and 0.20 mm. The composite interlayer may therefore usually have a thickness less than 1.6 mm, and more typically between 0.76 and 1 mm.

The surface area of the electrically conductive member may vary in relation to the dimensions of the laminated glazing of which it is a part, so that it may extend over only a small area of the glazing (approximately 10 %) or a larger area of the glazing (approximately 80 %). Preferably, however the electrically conductive member is substantially co-extensive with the sheet of interlayer material (or the composite interlayer, where appropriate) and the panes of glazing material. By "substantially coextensive" is meant that the electrically conductive member extends over the entire surface area of the glazing itself except for an area around the periphery of the glazing and any non-heated areas which may be present. The reason for avoiding the area around the periphery of the glazing is to prevent corrosion of the member, which may occur if it is located too close to the environment external of the glazing.

When the laminated glazing is used as an automotive vehicle glazing, one or more panes of the glazing may be provided with an obscuration band (typically an opaque band which masks the interface between the glazing and the vehicle and which shields the adhesive that holds the glazing in place from damaging ultra-violet radiation), which may extend around the entire periphery of the glazing. The obscuration band may be provided with a fade out band (a continuation of the obscuration band but having the obscuration applied in a decorative pattern over from 1 to 99 % of the remaining surface area of the glazing) which extends inwardly there from. When the electrically conductive member is substantially co-extensive with the remainder of the glazing (as described above) the outer extremity of the electrically conductive member may lie within the fade out band, thereby hiding the extremity from view - this may be done in accordance with EP 1 135 252 B1. The electrically conductive member may comprise a metal selected from a group, which includes copper, silver, gold, and aluminium or a metal alloy (e.g. iron-nickel or steel).

According to the present invention there is also provided a method of manufacturing a laminated glazing as hereinbefore described comprising
a) forming an electrically conductive member from a sheet of electrically conductive material,
b) locating the electrically conductive member and a sheet of interlayer material on a first pane of glazing material,
c) positioning a second pane of glazing material in register with the first pane of glazing material so that the electrically conductive member and the sheet of interlayer material are between the first and second panes, and
d) laminating the glazing in an autoclave.

The electrically conductive member is preferably etched from the sheet of electrically conductive material, as described earlier. The electrically conductive member may be supplied on a sheet of polymeric material, which may be interleaved between two sheets of interlayer material to form a composite interlayer, when in then located on the first pane of glazing material.

The laminated glazing may be curved. When this is the case, the composite interlayer may be pre-shaped to the curvature of the glazing prior to it being incorporated into the glazing, again as described earlier.

For a better understanding, the present invention will now be more particularly described by way of non-limiting example with reference to, and as shown in, the accompanying schematic drawings wherein:
Figure 1 is a plan view of a laminated glazing according to a first embodiment of the invention;
Figure 2 is a cross section along line A-A of Figure 1;
Figure 3 is a plan view of a laminated glazing according to a second embodiment of the invention;
Figure 4 is a plan view of an alternative version of a glazing according to the second embodiment of the invention;
Figure 5 is a plan view of a laminated glazing according to a third embodiment of the invention;
Figure 6 depicts some aspects of Figure 5 in greater detail;
Figure 7 shows a modified version of a glazing according to the third embodiment of the invention;
Figure 8 is a plan view of a laminated glazing according to a fourth embodiment of the invention; and
Figure 9 is a plan view of an alternative version of a glazing according to the fourth embodiment of the invention.

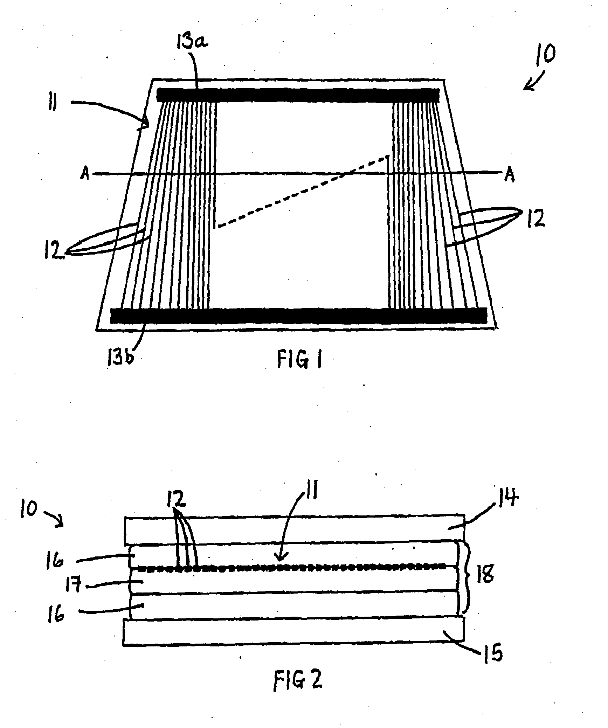

Figure 1 illustrates laminated glazing 10, the form of a vehicle windscreen, comprising an electrically conductive member 1, in the form of a heating element. Electrically conductive member 11 is made up of a plurality of heating lines 12 and upper and lower busbars 13a, 13b respectively, all of which are formed as one continuous piece from a sheet of electrically conductive material. Heating lines 12 are shown in greatly enlarged detail, and with fewer of them than would actually be present in such a glazing for clarity in the Figure. The diagonal dashed line across glazing 10 indicates that heating lines 12 extend over the glazing, but again for clarity, a portion of them have been omitted.

From Figure 1 it can be seen that glazing 10 is trapezoidal in shape; the distribution of heating lines 12 is such that they extend over most of the surface area of the glazing (over 90 % of the surface area), thereby enabling substantially the entire glazing to be heated, and not just a central rectangular portion as is common in many prior art, trapezoidal glazings that are heated with wires. This distribution of heating lines 12 is achieved by the ensuring that the spacing between adjacent lines is constant in the central rectangular portion of the glazing, but increases from upper busbar 13a to lower busbar 13b on either side of the central rectangular portion, so that heating lines 12 effectively "fan out" as they approach the sides of glazing 10. Such a distribution ensures that glazing 10 will be evenly heated (i.e. no hotspots will occur) when electrical power is supplied to busbars 13a, 13b.

More details of the construction of glazing 10 are shown in Figure 2. In this Figure, laminated glazing 10 further comprises outer pane of glazing material 14 and inner pane of glazing material 15, each in the form of a ply of soda-lime-silica glass. The terms "outer" and "inner" refer to the orientation of glazing 10 when installed in a vehicle.

Laminated between outer 14 and inner 15 panes of glazing material is composite interlayer 18. Composite interlayer 18 comprises ply of polymeric material 17, in the form of a ply of PET interleaved between two plies of interlayer material 16, in the form of plies of PVB. Electrically conductive member 11 is provided on ply of polymeric material 17.

Figure 3 illustrates laminated glazing 30, again in the form of a vehicle windscreen, comprising an electrically conductive member 31, in the form of a heating element. Figure 3 is similar to Figure 1 in that electrically conductive member 31 is made up of a plurality of heating lines 32 and busbars 33a, 33b, all of which are formed as one continuous piece from a sheet of electrically conductive material. Again, heating lines 32 are shown in greatly enlarged detail, and with fewer of them than would actually be present in such a glazing for clarity in the Figure. Glazing 30 further comprises non-heated area 34, which is an area in electrically conductive member 31 that is devoid of heating lines 32.

In prior art glazings, which include a non-heated area, especially those having a conductive coating for the heating element, there is a tendency for hotspots to form around the non-heated area, which is due to an increase in power density in this region. To obviate the occurrence of hotspots in the present invention, the power density around non-heated area 34 is managed by altering the width of those heating lines 32 closest to it. Figure 3 shows that these heating lines have an increased width in the vicinity of non-heated area 34, thus the power density is suitably controlled so that overall glazing 30 is evenly heated (and hotspots are avoided). Although in this example of the invention the power density is varied by altering the width of certain heating lines 32 (when they are at a constant thickness), it is instead possible to keep the width of all the heating lines the same and to vary the thickness of the relevant lines at the appropriate location along their lengths.

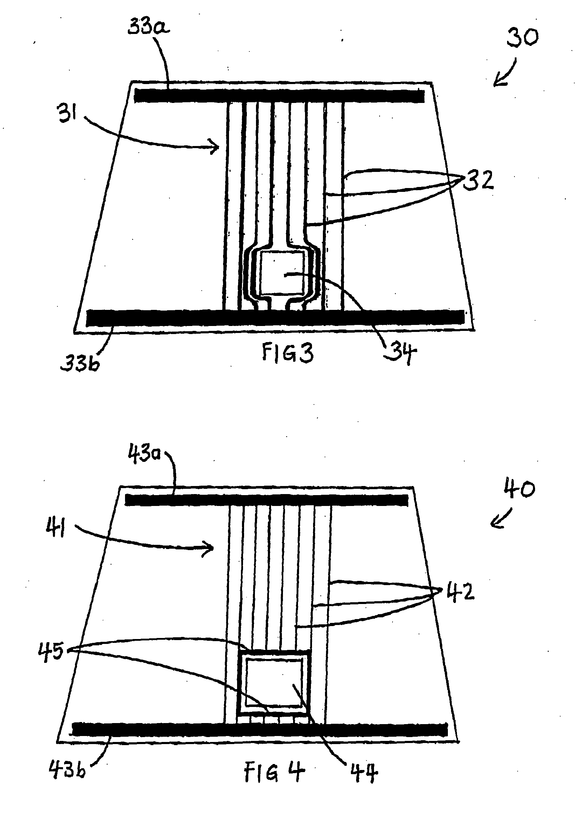

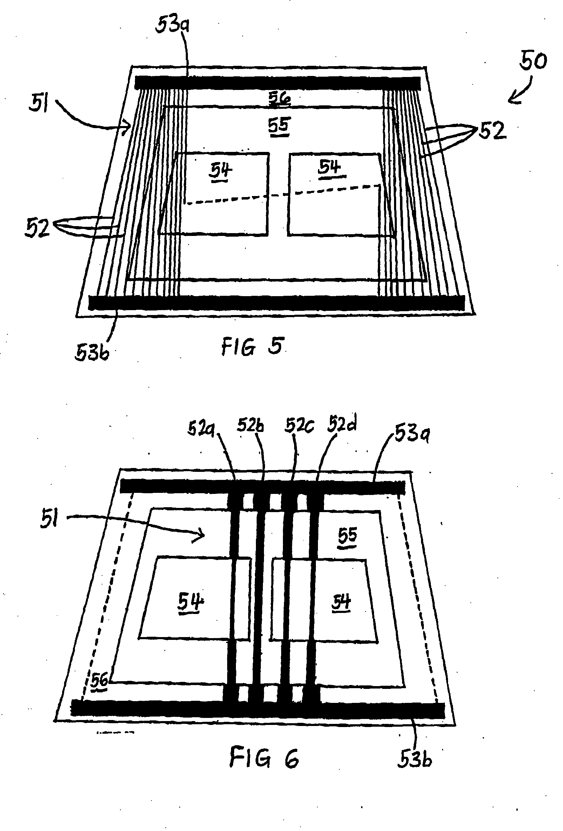

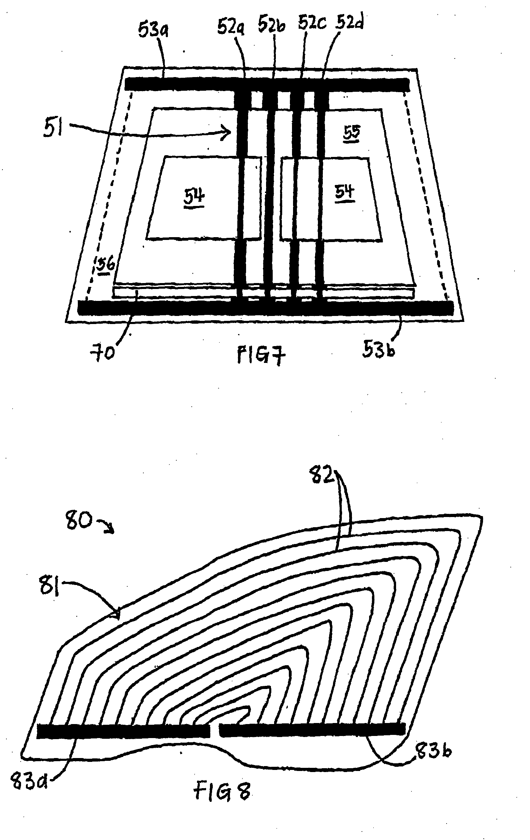

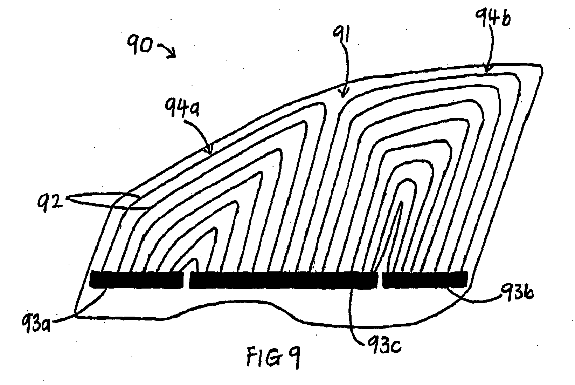

Figure 4 shows an alternative version of the glazing shown in Figure 3, Laminated glazing 40 is very similar to laminated glazing 30 in that it is in the form of a vehicle windscreen and comprises an electrically conductive member 41, in the form of a heating element, which is made up of a plurality of heating lines 42 and busbars 43a, 43b. Glazing 40 also comprises non-heated area 44. However, instead of varying the width of heating lines 42 around non-heated area 44 to avoid the occurrence of hotspots (as is done with glazing 30 in Figure 3), electrically conductive member 41 includes heating line extension 45 (which is also formed as one continuous piece with heating lines 42 and busbars 43a, 43b from a sheet of electrically conductive material). Heating line extension 45 joins those heating lines 42 that are close to non-heated area 44 to provide an electrical pathway around it. In doing so, this ensures that there is a permanent, easily accessible pathway around non-heated area 44 for electric current to follow, thus avoiding a build-up of power density around non-heated area 44. Heating line extension 45 has an increased width, compared to the width of heating lines 42, again so that the power density is controlled and the glazing 40 is evenly heated around non-heated area 44.

Figure 5 illustrates laminated glazing 50, again in the form of a vehicle windscreen, which is similar to the laminated glazings of Figures 1 to 4 in that it comprises an electrically conductive member 51, in the form of a heating element, which is made up of a plurality of heating lines 52 and busbars 53a, 53b. The area of glazing 50 to be heated by electrically conductive member 51 is split into three distinct zones: two identical heating zones 54 in the centre of glazing 50, intermediate heating zone 55 which surrounds heating zones 54, and peripheral heating zone 56 (the boundaries of which are defined by busbars 53a, 53b and outermost heating lines 52) which surrounds intermediate heating zone 55. Central heating zones 54 are designed to heat up more quickly than intermediate heating zone 55, which in turn is designed to heat up more quickly than peripheral heating zone 56. In this example, each of these three heating zones corresponds to the vision zones of a windscreen defined in ECE R43.

Figure 6 shows electrically conductive member 51 and heating zones 54, 55, 56 of glazing 50 of Figure 5 in more detail. Only four heating lines 52 are shown in Figure 6 (labelled 52a, 52b, 52c and 52d) and in greatly enlarged detail so that the following description of the configuration of these lines may be appreciated. Heating line 52b spans glazing 50 from upper busbar 53a to lower busbar 53b, passing through peripheral heating zone 56 and intermediate heating zone 55. Heating lines 52a, 52c, 52d similarly span glazing 50 and each passes through all three heating zones 54, 55, 56. As described above, central heating zones 54 are designed to heat up the fastest followed by intermediate heating zone 55 and finally peripheral heating zone 56. The required power density in each of these zones thus follows the progression: central heating zone 54 > intermediate heating zone 55 > peripheral heating zone 56, and the width of heating lines 52a, 52b, 52c, 52d varies as follows: peripheral heating zone 56 > intermediate heating zone 55 > central heating zones 54.

Therefore, heating line 52b has a first width as it extends from upper busbar 53a over peripheral zone 56, is reduced to a second width over intermediate zone 55, and then is increased back to the first width over peripheral zone 56 before merging with lower busbar 53b. Similarly, heating lines 52a, 52c, 52d have a first width as they extend from upper busbar 53a over peripheral zone 56, are reduced to a second width over intermediate zone 55, are further reduced to a third width over central zone 54, then increased back to the second width over intermediate zone 55, and then further increased back to the first width over peripheral zone 56 before merging with lower busbar 53b. Although in this example of the invention the power density is varied by altering the width of heating lines 52 (when they are at a constant thickness), it is instead possible to keep the width of all the heating lines the same and to vary the thickness of the relevant lines at the appropriate location along their lengths.

Figure 7 depicts a modified version of glazing 50 shown in Figures 5 and 6. In addition to the three heating zones 54, 55, 56, the glazing in Figure 7 further includes heating zone 70. Heating zone 70 corresponds to that part of a glazing conventionally referred to as a heated wiper rest area ("HWRA"), and is designed to heat up more quickly than any of heating zones 54, 55, 56. The width of any of heating lines 52, 52b, 52c, 52d is therefore at its minimum when passing through heating zone 70 to achieve the greatest power density.

Figure 8 illustrates laminated glazing 80, in the form of a vehicle sidelight, comprising an electrically conductive member 81, in the form of a heating element. Electrically conductive member 81 is made up of a plurality of heating lines 82 and a pair of busbars 83a, 83b respectively, all of which are formed as one continuous piece from a sheet of electrically conductive material. Heating lines 82 are shown in greatly enlarged detail, and with fewer of them than would actually be present in such a glazing for clarity in the Figure.

From Figure 8 it can be seen that glazing 80 has an irregular shape; the distribution of heating lines 82 is such that they extend over most of the surface area of the glazing (over 90 % of the surface area), thereby enabling substantially the entire glazing to be heated. In addition, such a distribution ensures that glazing 80 will be evenly heated (i.e. no hotspots will occur) when electrical power is supplied to busbars 83a, 83b. Although neither possibility is illustrated, the power density can be varied either by altering the width of heating lines 82 (when they are at a constant thickness) or by keeping the width of heating lines 82 the same and varying the thickness of the lines at an appropriate location along their lengths. The actual construction of glazing 80 is similar to that of glazing 10 described earlier, in that it comprises a composite interlayer (a ply of PET and two plies of PVB) which is interleaved between panes of soda-lime-silica glass.

Figure 9 shows an alternative version of the glazing shown in Figure 8. Laminated glazing 90 is very similar to laminated glazing 80 in that it is in the form of a vehicle sidelight and comprises an electrically conductive member 91, in the form of heating element, which is made up of a plurality of heating lines 92 and busbars 93a, 93b, 93c. However, instead of having electrically conductive member 91 as one circuit (as is done with glazing 80 in Figure 8), it is instead divided into two heating circuits 94a, 94b -circuit 94a is powered by busbars 93a, 93c and circuit 94b is powered by busbars 93b, 930.

The electrically conductive member which features in all of the glazings shown in Figures 1 through to 9 may be an etched sheet of copper foil, or other such suitable etched conductive medium, such as a foil of silver, gold, aluminium, an iron-nickel alloy or a steel.

## Claims

1. A laminated glazing comprising two panes of glazing material,a sheet of interlayer material extending therebetween, and an electrically conductive member, also positioned between the panes of glazing material wherein the electrically conductive member is formed from a sheet of electrically conductive material.

2. A laminated glazing as claimed in claim 1 wherein the electrically conductive member is etched from the sheet of electrically conductive material.

3. A laminated glazing as claimed in claim 1 or claim 2 wherein the electrically conductive member is a heating element.

4. A laminated glazing as claimed in claim 3 wherein the heating element comprises a plurality of spaced apart, fine heating lines.

5. A laminated glazing as claimed in claim 4 wherein the heating element further comprises a pair of busbars, to which the heating lines are electrically connected.

6. A laminated glazing as claimed in claim 4 or claim 5 wherein the heating lines are non-linear.

7. A laminated glazing as claimed in any of claims 3 to 6 wherein the heating lines are arranged so that the heating element includes a non-heated area.

8. A laminated glazing as claimed in any of claims 3 to 7 wherein each of the heating lines has a width less than 30 µm.

9. A laminated glazing as claimed in any of claims 3 to 8 wherein the spacing between each of the heating lines is greater than 0.5 mm.

10. A laminated glazing as claimed in any of claims 3 to 9 wherein the heating element has a power density which varies over the area of the glazing to be heated.

11. A laminated glazing as claimed in claim 10 wherein the heating element is divided into at least two heating zones, each having a different power density.

12. A laminated glazing as claimed in claim 11 wherein the heating element includes a heating zone known as a heated wiper rest area.

13. A laminated glazing as claimed in any preceding claim wherein the electrically conductive member is provided on a sheet of polymeric material.

14. A laminated glazing as claimed in claim 13 wherein the polymeric material is polyethylene terephthalate.

15. A laminated glazing as claimed in claim 13 or claim 14 wherein the sheet of polymeric material and the electrically conductive member are themselves laminated between two plies of interlayer material forming a composite interlayer.

16. A laminated glazing as claimed in claim 15 wherein the glazing is curved and the composite interlayer is pre-formed and pre-shaped to have the curvature of the glazing.

17. A laminated glazing as claimed in claim 15 or 16 wherein the composite interlayer has a thickness less than 1.6 mm.

18. A laminated glazing as claimed in any of claims 13 to 17 wherein the sheet of polymeric material has a thickness less than 1 mm.

19. A laminated glazing as claimed in any preceding claim wherein the electrically conductive member is substantially co-extensive with the sheet of interlayer material and the panes of glazing material.

20. A laminated glazing as claimed in any preceding claim wherein the electrically conductive member comprises a metal selected from a group which includes copper, silver, gold and aluminium, or a metal alloy.

21. A method of manufacturing a laminated glazing as claimed in claim 1 comprising
a) forming an electrically conductive member from a sheet of electrically conductive material,
b) locating the electrically conductive member and a sheet of interlayer material on a first pane of glazing material,
c) positioning a second pane of glazing material in register with the first pane of glazing material so that the electrically conductive member and the sheet of interlayer material are between the first and second panes, and
d) laminating the glazing in an autoclave.

22. A method of manufacturing a laminated glazing according to claim 21 wherein the electrically conductive member is etched from the sheet of electrically conductive material.

23. A method of manufacturing a laminated glazing according to claim 21 or claim 22 wherein the electrically conductive member is supplied on a sheet of polymeric material, and the sheet of polymeric material is interleaved between two sheets of interlayer material to form a composite interlayer, which is then located on the first pane of glazing material.

24. A method of manufacturing a laminated glazing according to claim 23 wherein, when the laminated glazing is curved, the composite interlayer is pre-shaped to the curvature of the glazing prior to it being incorporated into the glazing.

25. A laminated glazing substantially as hereinbefore described with reference to, and as illustrated in, Figures 1 to 9 of the accompanying drawings.

26. A method of manufacturing a laminated glazing substantially as hereinbefore described
